# EUROPÄISCHE PATENTSCHRIFT

(11) **EP 3 762 572 B1**
(45) Veröffentlichungstag und Bekanntmachung des Hinweises auf die Patenterteilung: **06.04.2022**
(21) Anmeldenummer: 19704792.1
(22) Anmeldetag: 11.02.2019
(51) Int. Cl.: E05D 15/06

(54) **VORRICHTUNG ZUR VERSCHIEBEFÜHRUNG EINER LAST, INSBESONDERE EINER SCHIEBETÜR**
DEVICE FOR SLIDINGLY GUIDING A LOAD, IN PARTICULAR A SLIDING DOOR
DISPOSITIF DE GUIDAGE COULISSANT D'UNE CHARGE, EN PARTICULIER D'UNE PORTE COULISSANTE

(30) Priorität: 07.03.2018 AT 501922018
(43) Veröffentlichungstag der Anmeldung: 13.01.2021
(73) Patentinhaber: Schuster, Heinz-Peter, 83064 Raubling (DE)
(72) Erfinder: Schuster, Heinz-Peter, 83064 Raubling (DE)
(74) Vertreter: Hübscher & Partner Patentanwälte GmbH
(86) Internationale Anmeldenummer: PCT/EP2019/053286
(87) Internationale Veröffentlichungsnummer: WO 2019/170371

(56) Entgegenhaltungen:
- WO-A1-87/05271
- DE-A1-102012 015 708
- US-A- 5 218 257

## Beschreibung

### Technisches Gebiet

Die Erfindung bezieht sich auf eine Vorrichtung zur Verschiebeführung einer Last, insbesondere einer Schiebetür, mit einer horizontalen Führung für wenigstens einen die Last aufnehmenden Anker, der durch ein nichtferromagnetisches Zwischenstück voneinander getrennte, vertikal übereinander angeordnete, gegensinnig gepolte Permanentmagneten mit zur vertikalen Führungsebene des Ankers senkrechten Polachsen aufweist, wobei die Permanentmagneten in einem durch die horizontale Führung im Wesentlichen geschlossenen, ferromagnetischen Kreis angeordnet sind.

### Stand der Technik

Um Lasten, insbesondere Schiebetüren, entlang einer horizontalen Führung betriebssicher und reibungsarm verschieben zu können, ist es bekannt (WO 87/005271 A1), eine Führung aus zwei parallelen, hochkant angeordneten Führungsstegen aus einem ferromagnetischen Werkstoff vorzusehen, zwischen die ein die Last aufnehmender, magnetischer Anker eingreift. Dieser Anker wird z. B. durch einen Permanentmagneten gebildet, dessen Polachse senkrecht gegenüber den Führungsstegen ausgerichteten ist, sodass der im Sinne eines Tauchankers wirksame Permanentmagnet unter der Wirkung der aufgenommenen Last nach unten aus den Führungsschienen gezogen wird, bis Gleichgewicht zwischen der abzutragenden Last und den magnetischen Einziehkräften herrscht. In dieser Gleichgewichtslage kann die Last im Wesentlichen reibungsfrei entlang der Führung verschoben werden. Zur Aufnahme größerer Lasten werden Anker mit zwei in Führungslängsrichtung hintereinander angeordneten Permanentmagneten vorgeschlagen, die jedoch gegensinnig gepolt sind, sodass sich der ferromagnetische Kreis zwischen den beiden Permanentmagneten über die beiden ferromagnetischen Führungsstege schließt.

Um die Hubkraft zu erhöhen, ist es darüber hinaus bekannt (US 5 218 257 A), einen Anker mit zwei durch ein nichtferromagnetisches Zwischenstück voneinander getrennten, vertikal übereinander angeordneten, gegensinnig gepolten Permanentmagneten vorzusehen, die zwischen den ferromagnetischen Schenkeln eines im Querschnitt U-förmigen Führungsprofils geführt sind und eine zu den Schenkeln senkrechte Polachse aufweisen. Das Führungsprofil bildet dabei einander gegenüberliegende, den beiden Permanentmagneten zugeordnete Polschuhe, deren Höhe der Höhe der Polflächen der zugehörigen Permanentmagneten entspricht, sodass jeder der beiden Permanentmagneten einen in seiner Wirkung gesonderten Tauchkern zwischen den einander gegenüberliegenden Polschuhen des ferromagnetischen Kreises bildet und sich die Hubkräfte der beiden Permanentmagneten überlagern, allerdings mit dem Nachteil eines vergrößerten Streufeldes.

### Darstellung der Erfindung

Der Erfindung liegt somit die Aufgabe zugrunde, eine Vorrichtung zur Verschiebeführung einer Last mithilfe eines in eine horizontale Führung eingreifenden Ankers aus mehreren Permanentmagneten so auszugestalten, dass die Energie der im Anker zusammengefassten Permanentmagneten besser genützt werden kann.

Ausgehend von einer Vorrichtung der eingangs geschilderten Art löst die Erfindung die gestellte Aufgabe dadurch, dass zwischen zwei ferromagnetischen Außenstegen beidseits eines ferromagnetischen Mittelstegs jeweils zwei Permanentmagneten angeordnet sind, von denen die einander bezüglich des Mittelstegs gegenüberliegenden Permanentmagneten gegensinnig gepolt sind und gesonderten, durch den gemeinsamen Mittelsteg und einem der Außenstege gebildeten, ferromagnetischen Kreisen angehören, und dass die horizontale Führung entweder den Mittelsteg oder die Außenstege bildet und die Polflächen der oberen Permanentmagneten vollständig abdeckt.

Zufolge dieser Maßnahmen verstärken die jeweils oberen Permanentmagneten der beiden Permanentmagnetpaare lediglich das in ihrem ferromagnetischen Kreis wirksame Magnetfeld, ohne zur Vergrößerung der Streufelder aufgrund einer lastbedingten vertikalen Verlagerung des Ankers beizutragen. Die Polflächen dieser oberen Permanentmagneten bleiben ja zum Unterschied zu den unteren Permanentmagneten durch die einen Teil der ferromagnetischen Kreise bildende horizontale Führung auch bei einem Lastangriff vollflächig abgedeckt, sodass sich lediglich im Bereich der unteren Permanentmagneten mit zunehmender Last zunehmende, den Wirkungsgrad beeinträchtigende magnetische Streufelder ausbilden können.

Da die Permanentmagnetpaare jeweils zwischen einem Außensteg und einem gemeinsamen Mittelsteg angeordnet sind, bilden die Außenstege und der Mittelsteg aufgrund der Polarisierung und der Polausrichtung der Permanentmagneten je einen ferromagnetischen Kreis für jedes Permanentmagnetpaar, wobei der Mittelsteg die Magnetfeder beider Magnetkreise aufnimmt, wodurch die Voraussetzungen für eine platzsparende, kompakte Baueinheit geschaffen werden, die trotz des Einsatzes kleinerer Permanentmagneten den Anforderungen hinsichtlich der Abtragung auch von größeren Lasten vorteilhaft genügt.

Die erfindungsgemäße Vorrichtung kann grundsätzlich in zwei Ausführungen der horizontalen Führung vorliegen, nämlich mit einem im Querschnitt T-förmigen Profil oder mit zwei in einem gegenseitigen Abstand hochkant verlaufenden Schenkeln. Beim Einsatz eines im Querschnitt T-förmigen Profils bildet der vom T-Schenkel nach unten abstehende, ferromagnetische Steg den zwischen die Permanentmagnetpaare ragenden gemeinsamen Mittelsteg für die ferromagnetischen Kreise, während bei einer Führung aus zwei hochkant verlaufenden ferromagnetischen Schenkeln diese Schenkel die Außenstege der ferromagnetischen Kreise bilden. Bei beiden Ausführungen können die erfindungsgemäßen Wirkungen vorteilhaft genützt werden.

### Kurze Beschreibung der Erfindung

In der Zeichnung ist der Erfindungsgegenstand beispielsweise dargestellt. Es zeigen
Fig. 1 eine erste Ausführungsform einer erfindungsgemäßen Vorrichtung zur Führung einer Last, insbesondere einer Schiebetür, in einem schematischen Schnitt durch die Führung und
Fig. 2 eine der Fig. 1 entsprechende Darstellung einer anderen Ausführungsform der erfindungsgemäßen Vorrichtung.

### Wege zur Ausführung der Erfindung

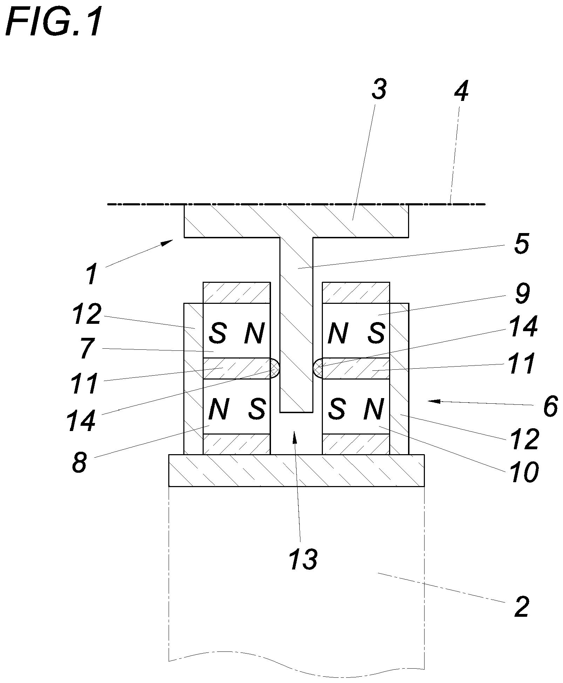

Die Vorrichtung gemäß der Fig. 1 zeigt eine horizontale Führung 1 für eine Last 2, nämlich eine Schiebetür, in Form eines im Querschnitt T-förmigen, ferromagnetischen Profils, das mit seinem T-Schenkel 3 beispielsweise im oberen Abschluss 4 einer Wandöffnung vorgesehen ist. Der vom T-Schenkel 3 nach unten vorstehende Steg 5 der Führung 1 wirkt mit einem an der Last 2 vorgesehenen Anker 6 zusammen, der zu beiden Seiten des Stegs 5 ein Paar von vertikal übereinander angeordneten Permanentmagneten 7, 8 bzw. 9, 10 aufweist, die jeweils durch ein nichtferromagnetisches Zwischenstück 11 voneinander getrennt sind und auf der vom Steg 5 der horizontalen Führung 1 gegenüberliegenden Seite durch je einen ferromagnetischen Außensteg 12 vollflächig abgedeckt sind. Die beiden Außenstege 12 bilden somit zusammen mit dem Steg 5 der Führung 1 als gemeinsamer Mittelsteg 13 in Verbindung mit den Permanentmagnetpaaren zwei gesonderte ferromagnetische Kreise. Die Anordnung ist dabei so getroffen, dass die durch die Pole N, S bestimmten Polachsen der Permanentmagneten 7, 8 bzw. 9, 10 senkrecht zum Mittelsteg 13 und zu den Außenstegen 12 ausgerichtet sind. Die Permanentmagneten 7, 8 bzw. 9, 10 der Permanentmagnetpaare sind gegensinnig gepolt, wie auch die einander bezüglich des Mittelstegs 13 gegenüberliegenden Permanentmagneten 7, 9 bzw. 8, 10 der beiden Permanentmagnetpaare gegensinnig gepolt sind. Während die Außenstege 12 unmittelbar an den Polflächen der zugehörigen Permanentmagneten 7, 8 bzw. 9, 10 anliegen, ist zwischen diesen Permanentmagneten 7, 8 bzw. 9, 10 und dem Mittelsteg 13 ein Führungsspiel vorhanden. Eine im Wesentlichen spielfreie Horizontalführung der Schiebetür 2 wird durch am Anker 6 vorgesehene Gleitstücke 14 sichergestellt.

Da die Polflächen der oberen Permanentmagneten 7, 9 der beiden Permanentmagnetpaare durch den gemeinsamen Mittelsteg 13 der ferromagnetischen Kreise vollflächig abgedeckt werden, wird durch diese oberen Permanentmagneten 7, 9 das im jeweiligen ferromagnetischen Kreis für die Hubkraft wirksame Magnetfeld durch eine Vormagnetisierung verstärkt, wobei ein sich mit dem Hub vergrößerndes Streufeld im Bereich der unteren Permanentmagneten 8, 10, nicht aber im Bereich der oberen Permanentmagneten 7, 9 auftritt, sodass die Permanentmagneten 7 bis 10 mit einem vorteilhaften Wirkungsgrad für die Lastverschiebung eingesetzt werden. Wegen der vergleichsweise kleinen Polflächen der unteren Permanentmagneten 8, 10 ist der das Gewicht der Last 2 ausgleichende Stellweg des Ankers 6 beschränkt, was vorteilhafte Voraussetzungen für eine geringe Einfederung bei der Aufnahme der beim Anfahren und Abbremsen der Last 2 auftretenden Kräfte schafft.

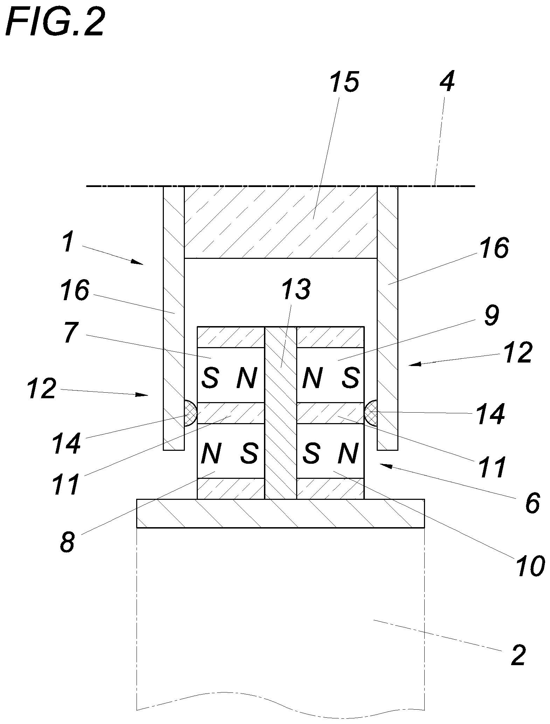

Die Ausführungsform nach der Fig. 2 unterscheidet sich von der nach der Fig. 1 im Wesentlichen nur dadurch, dass die horizontale Führung 1 einen U-förmigen Querschnitt aus einem nichtferromagnetischen Verbindungssteg 15 am oberen Abschluss 4 der Wandöffnung und aus von diesem Verbindungssteg 15 nach unten vorstehenden, hochkant verlaufenden, ferromagnetischen Schenkeln 16 aufweist, die die Außenstege 12 der ferromagnetischen Kreise bilden, deren gemeinsamer Mittelsteg 13 dem Anker 6 zugeordnet ist und die anliegenden Polflächen aller Permanentmagneten 7 bis 10 vollflächig abdeckt. Auch bei dieser Ausführungsform bleiben die jeweils oberen Permanentmagneten 7, 9 in jeder Hublage durch die Außenstege 12 der ferromagnetischen Kreise vollständig abgedeckt.

Es braucht wohl nicht besonders hervorgehoben zu werden, dass die Erfindung nicht auf die dargestellten Ausführungsformen beschränkt ist, die eine Führung 1 für eine hängende Last betreffen. Übereinstimmende Verhältnisse ergeben sich auch bei einer die Last abstützenden Verschiebeführung.

## Patentansprüche

1. Vorrichtung zur Verschiebeführung einer Last, insbesondere einer Schiebetür (2), mit einer horizontalen Führung (1) für wenigstens einen die Last aufnehmenden Anker (6), der durch ein nichtferromagnetisches Zwischenstück (11) voneinander getrennte, vertikal übereinander angeordnete, gegensinnig gepolte Permanentmagneten (7, 8 bzw. 9, 10) mit zur vertikalen Führungsebene des Ankers (6) senkrechten Polachsen aufweist, wobei die Permanentmagneten (7, 8; 9, 10) in einem durch die horizontale Führung (1) im Wesentlichen geschlossenen, ferromagnetischen Kreis angeordnet sind, **dadurch gekennzeichnet, dass** zwischen zwei ferromagnetischen Außenstegen (12) beidseits eines ferromagnetischen Mittelstegs (13) jeweils zwei Permanentmagneten (7, 8 bzw. 9, 10) angeordnet sind, von denen die einander bezüglich des Mittelstegs (13) gegenüberliegenden Permanentmagneten (7, 9 bzw. 8, 10) gegensinnig gepolt sind und gesonderten, durch den gemeinsamen Mittelsteg (13) und einen der Außenstege (12) gebildeten, ferromagnetischen Kreisen angehören, und dass die horizontale Führung (1) entweder den Mittelsteg (13) oder die Außenstege (12) bildet und die Polflächen der oberen Permanentmagneten (7, 9) vollständig abdeckt.

2. Vorrichtung nach Anspruch 1, **dadurch gekennzeichnet, dass** die horizontale Führung (1) ein im Querschnitt T-förmiges Profil aufweist, dessen vom T-Schenkel (3) nach unten abstehender Steg (5) den zwischen die Permanentmagnetpaare (7, 8; 9, 10) ragenden Mittelsteg (13) der ferromagnetischen Kreise bildet.

3. Vorrichtung nach Anspruch 1, **dadurch gekennzeichnet, dass** die horizontale Führung (1) zwei hochkant verlaufende, ferromagnetische Schenkel (16) als Außenstege (12) der ferromagnetischen Kreise bildet.

## Claims

1. Device for displaceably guiding a load, in particular a sliding door (2), having a horizontal guide (1) for at least one anchor (6) which receives the load and has permanent magnets (7, 8 or 9, 10) of opposite poles which are separated from each other by a non-ferromagnetic intermediate piece (11) and are arranged vertically one above the other and have pole axes which are perpendicular in relation to the vertical guide plane of the anchor (6), wherein the permanent magnets (7, 8; 9, 10) are arranged in a ferromagnetic circuit substantially closed by the horizontal guide (1), **characterised in that** two permanent magnets (7, 8 or 9, 10) are arranged in each case on both sides of a ferromagnetic centre web (13) between two ferromagnetic outer webs (12), the permanent magnets (7, 9 or 8, 10) lying opposite one another in relation to the centre web (13) being of opposite poles and belong to separate ferromagnetic circuits formed by the common centre web (13) and one of the outer webs (12), and **in that** the horizontal guide (1) forms either the centre web (13) or the outer webs (12) and completely covers the pole surfaces of the upper permanent magnets (7, 9).

2. Device as claimed in claim 1, **characterised in that** the horizontal guide (1) has a T-shaped profile in cross-section, the web (5) protruding downwards from the T-limb (3) forming the centre web (13) of the ferromagnetic circuits protruding between the permanent magnet pairs (7, 8; 9, 10).

3. Device as claimed in claim 1, **characterised in that** the horizontal guide (1) forms two upright-extending, ferromagnetic limbs (16) as outer webs (12) of the ferromagnetic circuits.

## Revendications

1. Dispositif pour le guidage en translation d'une charge, en particulier d'une porte coulissante (2), avec au moins un guide horizontal (1) pour au moins un ancrage (6) recevant la charge, qui présente des aimants permanents (7, 8 et 9, 10) de polarités opposées superposés verticalement et séparés entre eux par une pièce intermédiaire non ferromagnétique (11) avec des axes polaires perpendiculaires au plan de guidage vertical de l'ancrage (6), dans lequel les aimants permanents (7, 8 ; 9, 10) sont disposés dans un circuit ferromagnétique sensiblement clos par le guide horizontal (1), **caractérisé en ce qu'**entre deux bandes extérieures ferromagnétiques (12) de part et d'autre d'une bande centrale ferromagnétique (13) sont disposés deux aimants permanents (7, 8 et 9, 10), les aimants permanents (7, 9 et 8, 10) se faisant face par rapport à la bande centrale (13) étant de polarités opposées et appartenant à des circuits ferromagnétiques séparés formés par la bande centrale (13) commune et une des bandes extérieures (12), et que le guide horizontal (1) forme soit la bande centrale (13) soit les bandes extérieures (12) et recouvre entièrement les surfaces polaires des aimants permanents supérieurs (7, 9).

2. Dispositif selon la revendication 1, **caractérisé en ce que** le guide horizontal (1) présente un profilé à section en forme de T dont la bande (5) descendant de la barre du T (3) forme la bande centrale (13) des circuits ferromagnétiques saillant entre les paires d'aimants permanents (7, 8 ; 9, 10).

3. Dispositif selon la revendication 1, **caractérisé en ce que** le guide horizontal (1) forme deux pattes ferromagnétiques (16) s'étendant de champ en guise de bandes extérieures (12) des circuits ferromagnétiques.
